# EUROPEAN PATENT SPECIFICATION

(11) **EP 1 867 383 B1**
(45) Date of publication and mention of the grant of the patent: **15.01.2020**
(21) Application number: 06715208.2
(22) Date of filing: 03.03.2006
(51) Int. Cl.: B01D 59/04, B01D 59/34, B01D 59/50

(54) **METHOD OF CONCENTRATING OXYGEN ISOTOPE AND CONCENTRATION APPARATUS**
VERFAHREN ZUR KONZENTRATION EINES SAUERSTOFFISOTOPS UND KONZENTRATIONSVORRICHTUNG
PROCEDE DE CONCENTRATION D'UN ISOTOPE DE L'OXYGENE ET APPAREIL DE CONCENTRATION

(30) Priority: 28.03.2005 JP 2005093067
(43) Date of publication of application: 19.12.2007
(73) Proprietor: Taiyo Nippon Sanso Corporation, Shinagawa-ku, Tokyo 1428558 (JP)
(72) Inventor: TATSUMI, Yasuo, -chome, Shinagawa-ku, Tokyo, 1428558 (JP); HAYASHIDA, Shigeru, -chome, Shinagawa-ku, Tokyo, 1428558 (JP)
(74) Representative: Fairbairn, Angus Chisholm
(86) International application number: PCT/JP2006/304125
(87) International publication number: WO 2006/103870

(56) References cited:
- WO-A-2004/078325
- JP-A- 04 300 633
- JP-A- 2005 040 668

## Description

### TECHNICAL FIELD

The present invention relates to a method for concentrating ¹⁷O or ¹⁸O, which exists rarely as a stable oxygen isotope, by a photodissociation reaction. In addition, the present invention also relates to a method for purifying ¹⁶O by removing ¹⁷O and ¹⁸O by the concentration method.

### BACKGROUND ART

There is a method for concentrating ¹⁷O or ¹⁸O, which is an oxygen isotope, using a photochemical reaction. This method is a method in which ozone is generated from oxygen as a raw material by an ozonizer, the generated ozone gas is separated by distillation, and the separated ozone gas is irradiated with a semiconductor laser to selectively decompose desired isotopologues comprising an oxygen-stable isomer such as ¹⁷O or ¹⁸O, and thereby ¹⁷O or ¹⁸O is concentrated in the formed oxygen molecules.

### (Patent Document No. 1)

In contrast, a method in which, in order to improve concentration efficiency of oxygen isotopes, spontaneous dissociation of ozone molecules comprising no isotopes is prevented by reducing the ozone concentration by adding noble gas in ozone in a treatment step for highly concentrated ozone and a decrease of the concentration efficiency of oxygen isotopes is prevented, has also been suggested. (Patent Document No. 2)
Patent Document No. 1: Japanese Unexamined Patent Application, First Publication No. 2004-261776
Patent Document No. 2: Japanese Unexamined Patent Application, First Publication No. 2005-040668

Reference is also made to WO 2004/078325 which discloses a method for selectively concentrating the stable oxygen isotopes ¹⁷O and/or ¹⁸O, which exist in extremely small natural abundance, by using an ozone or peroxide photodissociation reaction employing noble gases.

### DISCLOSURE OF THE INVENTION

### PROBLEMS TO BE SOLVED BY THE PRESENT INVENTION

The invention disclosed in Japanese Unexamined Patent Application, First Publication No. 2005-040668 has a characteristic of mixing at least one noble gas selected from the group consisting of krypton, xenon, and radon with ozone.

However, xenon and radon sometimes react with oxygen and produce unstable compounds by silent electric discharge or ultraviolet ray irradiation in an ozonizer.

In addition, when non-dissociated ozone and oxygen are separated, xenon and krypton are solidified depending on operation temperatures, and there is the possibility of increasing the ozone concentration.

Therefore, when oxygen isotopes are concentrated using noble gas, there is a problem in that operation conditions are limited depending on the properties of the noble gas used.

In addition, in order to make a mean free pass of ozone molecules long and prevent molecular collision as much as possible in a photoreactor cell, the operation pressure is preferably low such as 13kPa (100 Torr) or less. However, when ozone is treated under low pressures, there is a problem in that the amount of gas treated in a subsequent distillation step decreases.

The present invention solves the problems, and provides a method and an apparatus in which after diluting ozone with gas, the ozone concentration is maintained low under conditions such that the noble gas is solidified, ozone molecules comprising ¹⁷O or ¹⁸O, which is a stable oxygen isotope, are photodissociated stably and selectively to obtain oxygen molecules, and thereby ¹⁷O or ¹⁸O is concentrated continuously in the oxygen molecules with high efficiency.

### MEANS FOR SOLVING THE PROBLEM

In order to solve the problems, the present invention provides a method for concentrating oxygen isotopes comprising: an ozone photodissociation step in which a mixed gas containing CF₄ and ozone is irradiated with light to dissociate selectively ozone isotopologues comprising a desired oxygen isotope in ozone to oxygen molecules; a trapping step for trapping a mixed gas containing oxygen molecules formed by the dissociation of the ozone in the ozone photodissociation step, non-dissociated ozone molecules, and CF₄; and an oxygen isotope concentration step in which the oxygen molecules are separated from the non-dissociated ozone molecules and CF₄ in the trapped mixed gas, and the oxygen isotopes are concentrated in the separated oxygen molecules.

In the method for concentrating oxygen isotopes, it is preferable that the oxygen isotope concentration step be a distillation separation step which is performed in coexistence of CF₄.

It is preferable that the method for concentrating oxygen isotopes comprise, before the ozone photodissociation step, an ozone formation step in which ozone is generated from raw material oxygen and an ozone separation step in which CF₄ is added to a gas containing the ozone generated in the ozone formation step, and a CF₄-ozone mixed gas containing CF₄ and ozone is separated from unreacted raw material oxygen and that the CF₄-ozone mixed gas separated in the ozone separation step be supplied to the ozone photodissociation step.

In the method for concentrating oxygen isotopes, it is preferable that the ozone formation step be performed by adding at least one noble gas selected from the group consisting of helium, neon, and argon to the raw material oxygen.

It is preferable that the method for concentrating oxygen isotopes comprise, after the oxygen isotope concentration step, an ozone decomposition step in which ozone in the mixed gas separated in the oxygen isotope concentration step is decomposed to oxygen; and a CF₄ separation step in which CF₄ is separated from oxygen formed in the ozone decomposition step, and that the CF₄ separated in the CF₄ separation step be mixed with ozone formed in the ozone formation step, and thereby CF₄ be recycled.

It is preferable that the method for concentrating oxygen isotopes comprise, between the oxygen isotope concentration step and the ozone decomposition step, a second ozone photodissociation step in which the mixed gas containing non-dissociated ozone molecules and CF₄ separated in the oxygen isotope concentration step is irradiated with another light having a wavelength different from the wavelength of the light irradiated in the ozone photodissociation step to dissociate selectively other ozone isotopologues comprising another oxygen isotope than the ozone isotopologues dissociated in the ozone photodissociation step; a second trapping step for trapping a mixed gas containing oxygen molecules formed by dissociation in the second ozone photodissociation step, non-dissociation ozone molecules, and CF₄; and a second oxygen isotope concentration step in which the oxygen molecules are separated from the non-dissociated ozone molecules and CF₄ in the trapped mixed gas, and the oxygen isotopes are concentrated in the separated oxygen molecules.

In the oxygen isotope concentration method, it is preferable that the light used in the ozone photodissociation step be either near-infrared light within the range of 700-1000 nm, or visible light within the range of 450-850 nm.

In the oxygen isotope concentration method, it is preferable that the wavelength of the light used in the ozone photodissociation be within the range of 991.768-992.684 nm.

In the oxygen isotope concentration method, it is preferable that an absorption wavelength of the ozone be adjusted by an applying electrical field when irradiating with light in the ozone photodissociation step.

In the oxygen isotope concentration method, it is preferable that the ozone photodissociation step be performed at low temperatures and low pressures,

In the oxygen isotope concentration method, it is preferable that the temperature at which the mixed gas is trapped be 160 K or less, and the CF₄-ozone mixed gas be continuously solidified and trapped in the trapping step.

Furthermore, in the oxygen isotope concentration method, it is also preferable that the oxygen isotope comprised in the ozone molecules to be dissociated in the ozone photodissociation step be at least one consisting of ¹⁷O and ¹⁸O.

In addition, in order to solve the problems, the present invention provides an apparatus comprising: an ozone photodissociation means for irradiating light to a mixed gas containing CF₄ and ozone in order to dissociate ozone isotopologues comprising a desired oxygen isotope in the ozone; and an oxygen isotope concentration means for separating the oxygen molecules formed by the ozone photodissociation from non-dissociated ozone and CF₄ and concentrating the oxygen isotopes in the separated oxygen molecules.

### EFFECTS OF THE PRESENT INVENTION

According to the method and apparatus for concentrating oxygen isotopes of the present invention, it is possible that an ozone photodissociation is stably carried out while maintaining the ozone concentration low under conditions in which noble gas is solidified, and ¹⁷O or ¹⁸O is concentrated continuously with high efficiency.

When the ozone formation step is performed by adding at least one noble gas selected from the group consisting of helium, neon, and argon to the raw material oxygen, oxygen is diluted with the noble gas. Thereby, when oxygen is separated in the ozone separation step, an adjustment of the flow rate of oxygen becomes easier compared with an adjustment of the flow rate of a small amount of oxygen with high purity, and handling is improved.

When the concentration method for oxygen isotopes comprises, after the oxygen isotope concentration step, the ozone decomposition step in which the ozone molecules in the mixed gas separated in the oxygen isotope concentration step are decomposed; and the CF₄ separation step in which CF₄ is separated from oxygen molecules formed in the ozone decomposition step, and the CF₄ separated in the CF₄ separation step is mixed with ozone formed in the ozone formation step, the CF₄ separated from the mixed gas obtained in the oxygen isotope concentration step is recycled in the ozone formation step. Thereby, CF₄ can be reused and efficiency can be improved.

When the concentration method for oxygen isotopes comprises, between the oxygen isotope concentration step and the ozone decomposition step, the second ozone photodissociation step in which the mixed gas containing non-dissociated ozone and CF₄ separated in the oxygen isotope concentration step is irradiated with light having a wavelength different from the wavelength of the light irradiated in the ozone photodissociation step in order to dissociate selectively ozone isotopologues to oxygen molecules which are other than the ozone isotopologues dissociated in the ozone photodissociation step; the second trapping step in which a mixed gas containing oxygen molecules formed by dissociation in the second ozone photodissociation step, non-dissociated ozone, and CF₄; and the second oxygen isotope concentration step in which the oxygen molecules are separated from the non-dissociated ozone and CF₄ in the trapped mixed gas, and the oxygen isotopes are concentrated in the separated oxygen molecules, it is possible to continuously photodissociate the ozone isotopologues comprising different kinds of oxygen isotope, and continuously concentrate oxygen isotopes, and thereby oxygen isotopes are concentrated efficiently.

In the oxygen isotope concentration method, when the light used in the ozone photodissociation step is within the range of 700-1000 nm, in particular, near-infrared light within the range of 991.768-992.684 nm or visible light within the range of 450-850 nm, or when an absorption wavelength of the ozone molecules is adjusted by applying an electrical field in the ozone photodissociation step, it is possible to dissociate efficiently and selectively the ozone isotopologues comprising a desired oxygen isotope to oxygen molecules, and the oxygen isotopes are concentrated efficiently.

When the ozone photodissociation step is performed at low temperatures and low pressures, since the ozone isotopologues comprising a desired oxygen isotope absorb light efficiently, selective photodissociation is promoted. In addition, spontaneous dissociation to oxygen molecules is prevented, and oxygen isotopes are effectively concentrated,

When the temperature at which the mixed gas is trapped is 160 K or less, and the CF₄-ozone mixed gas is continuously solidified and trapped in the trapping step, the mixed gas formed in the ozone photodissociation step is effectively trapped, and oxygen isotopes are effectively concentrated.

### BRIEF DESCRIPTION OF THE DRAWINGS

[Figure 1] Fig. 1 is a schematic diagram showing a first embodiment of the concentration method for stable oxygen isotopes according to the present invention.
[Figure 2] Fig. 2 is a schematic diagram showing a second embodiment of the concentration method for stable oxygen isotopes according to the present invention.
[Figure 3] Fig. 3 is a schematic diagram showing a third embodiment of the concentration method for stable oxygen isotopes according to the present invention.
[Figure 4] Fig. 4 is diagram showing an absorption spectrum of ozone molecules.

**EXPLANATION OF REFERENCE SYMBOLS**

| | | | |
|---|---|---|---|
| 11: | ozone formation step | 12: | ozone separation step |
| 13: | ozone photodissociation step | 14: | oxygen isotope concentration step |
| 15: | first passage | 16: | second passage |
| 17: | third passage | 18: | fourth passage |
| 19: | fifth passage | 21: | second ozone photodissociation step |
| 22: | second oxygen isotope concentration step | | |
| 23: | ozone decomposition step | 24: | CF₄ recovery step |
| 25: | sixth passage | 26: | seventh passage |
| 31: | trapping step | GO: | raw material oxygen |
| KG: | noble gas | CF: | carbon tetrafluoride (CF₄) |
| RO: | raw material oxygen or recycling raw material oxygen | | |
| OC, OC1, OC2: | oxygen comprising a desired oxygen isotope | | |
| OF, OF1, OF2: | CF₄-ozone mixed gas | | |
| OF3: | CF₄-oxygen mixed gas | WO: | oxygen in CF₄-oxygen mixed gas (OF3) |
| L, L1, L2: | light having a specific wavelength | | |

### BEST MODE FOR CARRYING OUT THE INVENTION

Below, the present invention will be explained in detail.

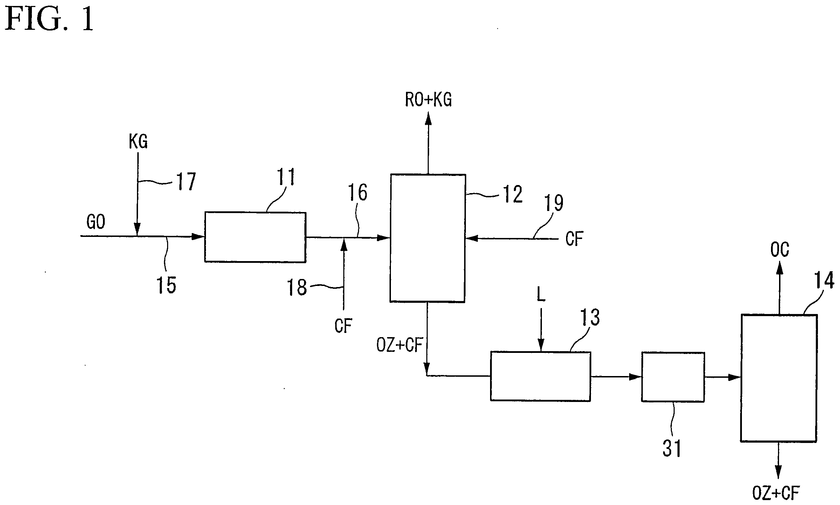

Fig. 1 is a schematic diagram showing a first embodiment of the concentration method for stable oxygen isotopes according to the present invention, and specifically shows an embodiment of the concentration method using an apparatus integrally comprising a device for obtaining CF₄-ozone mixed gas at the previous stage of the concentration device for stable oxygen isotopes.

The first embodiment of the present invention is explained in detail.

This embodiment comprises an ozone formation step 11 in which ozone is formed by silent discharge of raw material oxygen GO, or irradiating raw material oxygen GO with light from a mercury lamp and so forth, an ozone separation step 12 in which the raw material oxygen containing ozone formed in the ozone formation step 11 is separated into ozone OZ and raw material oxygen RO, an ozone photodissociation step 13 in which the ozone OZ separated in the ozone separation step 12 is irradiated with light L having a specific wavelength in the presence of CF₄ to dissociate selectively ozone molecules comprising a desired oxygen isotope into oxygen molecules, a trapping step 31 in which a mixed gas containing oxygen OC generated in the ozone photodissociation step 13, non-dissociated ozone, and CF₄ is cooled and trapped, and an oxygen isotope concentration step 14 in which oxygen OC generated by the dissociation of ozone is separated from the non-dissociated ozone OZ in order to concentrate the oxygen isotopes in the oxygen.

Moreover, a system comprising the units for conducting these steps further comprises a first passage 15 for introducing raw material oxygen in the ozone formation step 11, a second passage 16 for introducing an oxygen containing ozone formed in the ozone formation step 11 to the ozone separation step 12, a third passage 17 for introducing at least one noble gas KG selected from the group consisting of helium, neon, and argon, and a fourth passage 18 and/or a fifth passage 18 for introducing CF₄ (abbreviated as "CF" in FIG. 1) used to dilute ozone which is provided at at least one suitable position in the ozone separation step 12.

Moreover, the noble gas KG is introduced from the third passage 17 as explained above. The introduced noble gas KG is discharged from the system together with raw material oxygen RO after separating ozone in the ozone separation step 12. In addition, the CF₄ introduced from the fourth passage 18 and/or the fifth passage 19 is, as explained below, concentrated in an ozone OZ side in the ozone separation step 12. Therefore, a mixed gas containing CF₄ and ozone OZ is supplied to the ozone photodissociation step 13 without supplying the noble gas KG.

In the ozone formation step 11, ozone can be formed easily by silent discharge of oxygen serving as the material with an ozonizer, or by irradiating with ultraviolet light from a mercury lamp and so forth. Although oxygen of high purity that contains as few impurities such as nitrogen as possible is preferably used for the raw material oxygen, if these impurities can be adequately separated when separating the ozone and oxygen, then industrial oxygen having a purity of about 99.5% can also be used for the raw material oxygen.

In addition, it is also possible that a CF₄-ozone mixture is previously formed in another step, and the CF₄-ozone mixture is introduced in the ozone photodissociation step 13. Thereby, the embodiment may comprise only the ozone photodissociation step 13 and the oxygen isotope concentration step 14 without the ozone formation step 11 and the ozone separation step 12.

In this case, oxygen comprising ¹⁷O or ¹⁸O concentrated in the concentration method of the present invention as well as oxygen comprising ¹⁷O or ¹⁸O concentrated in other methods can be used for the raw material oxygen. Moreover, separation of oxygen, ozone and CF₄ is easily carried out by low-temperature distillation, or low-temperature adsorption utilizing an adsorbent such as silica gel.

In the ozone separation step 12, it is preferable that raw material oxygen and the CF₄-ozone mixed gas be separated by low-temperature distillation utilizing a distillation column. When a distillation column is used, and a CF₄-ozone-raw material oxygen mixture is cooled to a certain temperature in a heat-exchange device, oxygen is concentrated in top of the distillation column, and ozone OZ and CF₄ are concentrated at the bottom of the distillation column.

Furthermore, operation conditions of the distillation column are not limited but it is preferable that the operation conditions be set so as not to contain oxygen in the ozone side as much as possible because when oxygen is contaminated in ozone in the ozone photodissociation step 13, the concentration of oxygen molecules containing desired oxygen isotopes decreases.

In addition, nitrogen, argon, or oxygen at a suitable temperature can be used as a cooling source for a condenser or a heating source for a reboiler, which is an additional device needed to operate the distillation column.

In the ozone photodissociation step 13, the CF₄-ozone mixture containing ozone at low concentration by adding CF₄ is irradiated with light having a specific wavelength in order to selectively photodissociate ozone isotopologues comprising the desired oxygen isotope in their molecules.

According to the kinds of oxygen isotope and their combination, there are 18 types of the aforementioned ozone isotopologues, consisting of ¹⁶O¹⁶O¹⁶O, ¹⁶O¹⁶O¹⁷O, ¹⁶O¹⁷O¹⁶O, ¹⁶O¹⁶O¹⁸O, ¹⁶O¹⁸O¹⁶O, ¹⁶O¹⁷O¹⁷O, ¹⁷O¹⁶O¹⁷O, ¹⁶O¹⁷O¹⁸O, ¹⁷O¹⁶O¹⁸O, ¹⁶O¹⁸O¹⁷O, ¹⁷O¹⁷O¹⁷O, ¹⁶O¹⁸O¹⁸O, ¹⁸O¹⁶O¹⁸O, ¹⁷O¹⁷O¹⁸O, ¹⁷O¹⁸O¹⁷O, ¹⁷O¹³O¹⁸O, ¹⁸O¹⁷O¹⁸O and ¹⁸O¹⁸O¹⁸O.

In the present invention, the oxygen molecules comprising a desired oxygen isotope are formed due to photodissociation by irradiating a mixture of these various types of isotopologues with a specific light.

For example, when the isotopologue ¹⁶O¹¹O¹⁷O is irradiated with light, three oxygen molecules are generated from two ozone molecules according to the reaction formulas shown below.

¹⁶O¹⁶O¹⁷O + "light-irradiation" → O₂ + O (1)

O₃ + O → 2O₂ (2)

As shown in the reaction formula (1), the ¹⁷O comprised in the ozone molecule which was photodissociated is either contained in the formed "O₂" or is in the form of "O". This "O" immediately reacts with another ozone molecule to form two oxygen molecules as shown in the reaction formula (2). Due to this, the ¹⁷O is present in one of the three oxygen molecules formed in the reaction formulas (1) and (2). This means that ¹⁷O is concentrated in oxygen molecules formed by dissociation of ozone molecules. Although there is the possibility of ¹⁷O or ¹⁸O also being comprised in the ozone molecule that reacts in the reaction formula (2), the probability is extremely low such that the amount can be ignored.

The bond dissociation energy of ozone is 1.05 eV, and ozone is dissociated by absorption of light having a wavelength of 1,18 µm or less. This light absorption by ozone is known to take place in the bands indicated below.

| | | |
|---|---|---|
| Wulf band | 700-1,000 nm (1.2-1.8 eV) | Near infrared band |
| Chappuis band | 450-850 nm (1.5-2.8 eV) | Visible band |
| Huggins band | 300-360 nm (3.4-4.1 eV) | Ultraviolet band |
| Hartley band | 200-300 nm (4.1-6.2 eV) | Ultraviolet band |

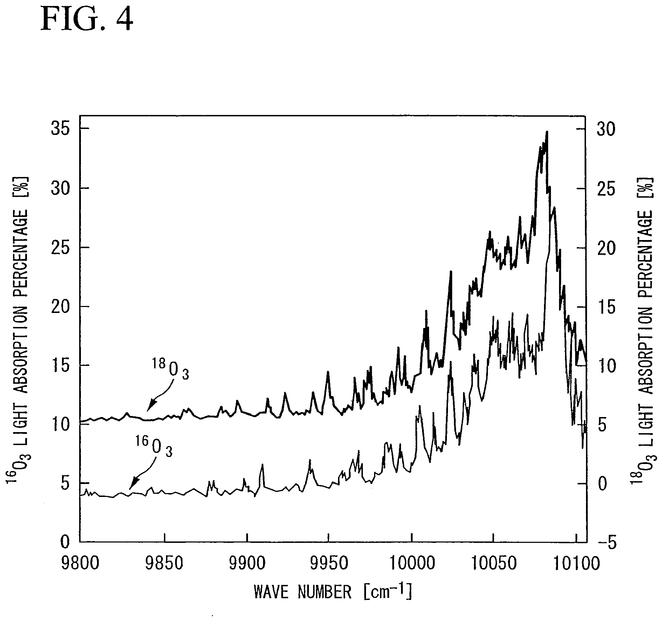

In these bands, in the vicinity of a wavelength of 1000 nm (wave number: 10,000 cm⁻¹) of the Wulf band, a sharp absorption peak as shown in Fig. 4 is observed according to the literature (Journal of Chemical Physics, Vol. 108, No. 13, pp. 5449-5475). Fig. 4 shows the optical absorbance for ¹⁶O₃ (¹⁶O¹⁶O¹⁶O) and ¹⁸O₃ (¹⁸O¹⁸O¹⁸O). It can be understood from Fig. 4 that the maximum peak of ¹⁶O₃ is a wave number of about 10,081 cm⁻¹ (wavelength: 991.965 nm), and the maximum peak of ¹⁸O₃ is a wave number of about 10,076 cm⁻¹ (wavelength: 992.457 nm).

In addition, in another document "Spectrochimica Acta, Part A 57 (2001), pp 561-579", a determination of the attribution of vibration-rotation level based on experiments and calculations is carried out. According to the results, the maximum peak of ¹⁶O₃ is a wave number of 10,083 cm⁻¹ (wavelength: 991.768nm), and the maximum peak of ¹⁸O₃ is a wave number of 10,073.7 cm⁻¹ (wavelength: 992.684 nm). Thus, the wavelength at which an isotopologue of ozone molecules containing ¹⁷O or ¹⁸O can be efficiently dissociated is located between 10,073-7 cm⁻¹ and 10,083 cm⁻¹, and it is understood that the desired ozone can be selectively dissociated by selecting a wavelength within that range.

Although other absorption peaks can be used, in consideration of the dissociation efficiency of the ozone, the aforementioned range is optimal. In particular, there is also the advantage of such light in the near infrared or visible band being easier to handle compared with the case of using light of the ultraviolet band. In addition, if ultraviolet light of a high energy level is used, in addition to the target ozone isotopologue, other ozone isotopologues may also end up being dissociated, thereby lowering the concentration efficiency of the oxygen isotope.

In the case of poor selective dissociation efficiency due to the light source having shifted slightly from the desired ozone dissociation wavelength, since the absorption wavelength of ozone can be shifted using the Stark effect by applying an electric field to the ozone when irradiating with light, the absorption wavelength of the ozone can be made to precisely match the wavelength of the light source.

Examples of light sources that can be used to obtain light of this wavelength include spectral light of sunlight as well as colored laser light capable of optical pumping with an InGaAsP semiconductor laser or light emitting diode, AlGaInP semiconductor laser or light emitting diode, GaAsSb semiconductor laser or light emitting diode, CdZnTe semiconductor laser or light emitting diode, CdZnSe semiconductor laser or light emitting diode, mercury lamp, YAG laser, Ar ion laser or Kr ion laser.

When irradiating ozone with light, light is preferably radiated at a low pressure of, for example, 13 kPa (100 Torr) or less, in order to lengthen the mean free path of the ozone molecules and suppress molecular collisions as much as possible. As a result, increases in absorption width of the light caused by molecular collisions can be avoided.

In order to suppress spontaneous dissociation of ozone, it is preferable to cool not only during irradiation of the ozone with light, but the entire system as well, to a low temperature within the range of, for example, 100-250K. As a result, in addition to making the absorption peaks sharper, the formation of oxygen by spontaneous dissociation can be suppressed, thereby making it possible to improve the concentration rate of oxygen containing oxygen isotopes.

In this case, it is possible to use a photoreactor cell provided with a specific light source in the ozone photodissociation step 13 and use nitrogen, argon, or oxygen at an appropriate temperature as a cooling source for cooling the photodissociation cell.

The pressure in the system comprising the photoreactor cell can be reduced by providing a vacuum pump with a passage which is downward from the photoreactor cell or liquefaction-depressurization using liquefied nitrogen and the like. The pressure and the temperature in the system comprising the photoreactor cell may be adjusted depending on the dissociation conditions of ozone within a scope which does not liquefy or solidify ozone and CF₄.

In the case of concentrating oxygen isotopes using ozone, it is preferable to use ozone having as high a purity as possible, in consideration of the radiation efficiency of the light and the concentration efficiency. However, the use of highly pure ozone may result in problems such as a decrease in the concentration of oxygen molecules comprising an isotope as shown in below.

The photodissociation reaction of ozone is a reaction in which two ozone molecules generate three oxygen molecules as shown in the reaction formulae (1) and (2), and this is an exothermic reaction. Therefore, the oxygen molecules which are obtained by dissociation sometimes have a large amount of kinetic energy. Thereby, when the ozone concentration is high, there is the possibility that the oxygen molecules sometimes collide with the ozone molecules, and dissociate the ozone molecules to oxygen molecules.

Since such collision of oxygen molecules occurs non-selectively, there is the possibility that a desired oxygen isotope is contained in the oxygen molecules formed by the collision of ozone molecules, but that probability is extremely low. Therefore, oxygen comprising a desired oxygen isotope resulting from dissociation by irradiation with light L1 ends up being diluted.

In addition, when the ozone concentration is high, the possibility is increased of ozone contacting a metal surface having catalyst functions, and being spontaneously dissociated. When a large amount of oxygen molecules which do not comprise a desired oxygen isotope are generated by spontaneous dissociation, since the oxygen molecules are contaminated in oxygen to be separated in the oxygen isotope concentration step, the concentration percentage of oxygen isotopes falls considerably.

In contrast, ozone OZ formed by separation in the ozone separation step 12 is diluted by mixing with CF₄. The oxygen molecules having a large amount of kinetic energy collide with CF₄ and scatter and loose their kinetic energy in the present invention. Therefore, it is possible to decrease the possibility that oxygen molecules having a large amount of kinetic energy collide with ozone molecules to dissociate. Thereby, it is also possible to suppress the generation of oxygen molecules which do not comprise a desired oxygen isotope.

In addition, since the ozone is diluted by mixing with CF₄, it is also possible to suppress the spontaneous dissociation caused by contacting ozone with a metal surface having catalyst functions. Due to these efficiencies, the concentration percentage of oxygen isotopes can be increased.

Furthermore, since CF₄ almost does not exert influences on the photochemical reaction of ozone in the ozone photodissociation step 13, when ozone is diluted by CF₄, desired ozone isopotomers are selectively dissociated by a photochemical reaction.

Since mixing between ozone and CF₄ can be carried out at any position in each step, an appropriate amount of CF₄ may be mixed in each step. When the low-temperature distillation is carried out in the oxygen isotope concentration step 14 and the ozone separation step 12, an appropriate amount of CF₄ is added in the liquefied ozone such that the ozone concentration is not high. However, it is also possible to add concentrated CF₄ in a gas phase used in order to obtain an ascending gas or a falling liquid which is necessary for the distillation operations.

Since the mixed gas formed in the ozone photodissociation step 13 is continuously trapped in the subsequent trapping step 31, it is possible to effectively achieve the concentration of oxygen isotopes in the subsequent oxygen isotope concentration step 14.

The trapping of the mixed gas is preferably carried out at 160 K or less, and more preferably at 90 to 160 K, which is the temperature range that the CF₄-ozone mixture is liquid.

As explained above, loss of ozone due to spontaneous dissociation or dissociation of ozone caused by collision with formed oxygen molecules can be prevented by carrying out the ozone photodissociation step 13 in the presence of CF₄.

In the subsequent oxygen isotope concentration step 14, oxygen molecules comprising ¹⁷O or ¹⁸O formed in the ozone photodissociation step 13 are separated from the non-dissociated ozone OZ. During the separation, CF₄ contributes to the improvement of separation efficiency. Because, CF₄ acts in the oxygen isotope concentration step 14 in the same manner as CF₄ in the ozone separation step 12. Therefore, oxygen molecules comprising a desired oxygen isotope can be efficiently obtained with as high a concentration as the oxygen OC.

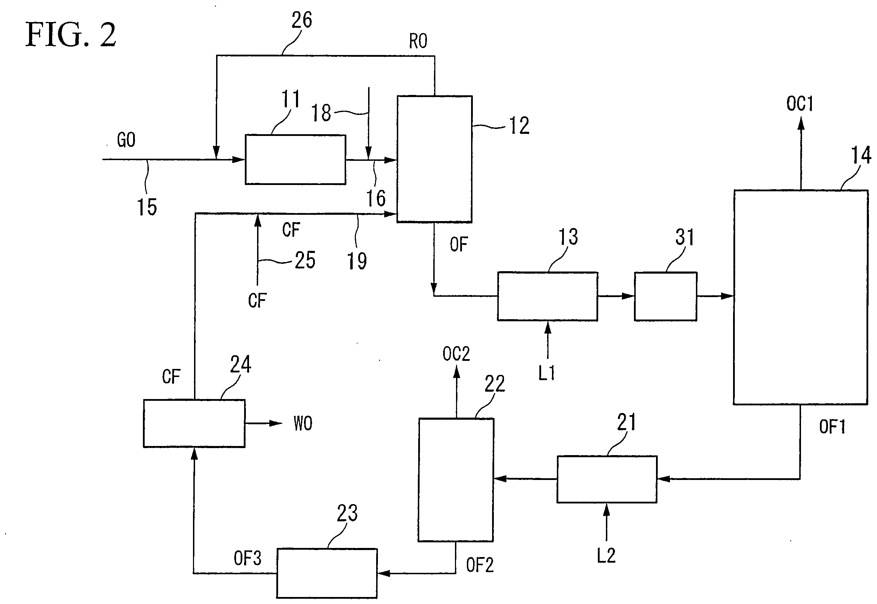

Fig. 2 is a schematic diagram showing a second embodiment of the concentration method for stable oxygen isotopes according to the present invention.

Moreover, the components in Fig. 2 which are the same as the components shown in Fig. 1 have the same reference numerals as shown in Fig. 1. Thereby, an explanation for those same components is omitted in this embodiment.

This embodiment comprises the following steps, specifically, comprises:
an ozone formation step 11 in which ozone is formed from raw material oxygen GO;
an ozone separation step 12 in which the ozone-raw material oxygen mixed gas introduced from the ozone formation step 11 and CF₄ (abbreviated as "CF" in FIG. 2) introduced from the fifth passage 19 are separated into recycling raw material oxygen RO and a CF₄-ozone mixed gas OF;
an ozone photodissociation step 13 in which the CF₄-ozone mixed gas OF from the ozone separation step 12 is irradiated with light L1 having a specific wavelength in order to dissociate ozone comprising a desired oxygen isotope into oxygen;
a trapping step 31 in which a mixed gas (a mixed gas containing oxygen comprising a desired oxygen isotope formed by dissociation of ozone, non-dissociated ozone, and CF₄) is cooled and trapped;
an oxygen isotope concentration step 14 in which the mixed gas trapped in the trapping step 31 is separated into oxygen OC1 comprising a desired oxygen isotope, and CF₄-ozone mixed gas OF1 containing non-dissociated ozone and CF₄, thereby the desired oxygen isotopes are concentrated in the oxygen OC1 comprising a desired oxygen isotope;
a second ozone photodissociation step 21 in which the CF₄-ozone mixed gas OF1 is irradiated with light L2 having a specific wavelength different from the wavelength of the light L1;
a second oxygen isotope concentration step 22 in which the mixed gas (the mixed gas containing oxygen comprising a desired oxygen isotope which is formed by dissociation of ozone, non-dissociated ozone, and CF₄) from the second ozone photodissociation step 21 is separated into oxygen OC2 comprising another desired oxygen isotope, and CF₄-ozone mixed gas OF2 containing non-dissociated ozone and CF₄, thereby the desired oxygen isotopes are concentrated in the oxygen OC2 comprising another desired oxygen isotope;
an ozone decomposition step 23 in which ozone contained in the CF₄-ozone mixed gas OF2 is decomposed into oxygen in order to obtain a CF₄-oxygen mixed gas OF3;
a CF₄ recovery step 24 in which oxygen WO and CF₄ contained in the CF₄-oxygen mixed gas OF3 are separated;
a fifth passage 19 for supplying CF₄ to the ozone separation step 12;
a sixth passage 25 for supplying CF₄ to the fifth passage 19; and
a seventh passage 26 for mixing the recycling raw material oxygen RO separated in the ozone separation step 12 in raw material oxygen GO.

Raw material oxygen GO supplied from the first passage 15 is subjected to silent discharge in an organizer and a part thereof is ozonized, and an ozone-raw material oxygen mixed gas is obtained in the ozone formation step 11, and the obtained mixture is introduced in the ozone separation step 12.

In the ozone separation step 12, it is preferable that oxygen and the CF₄-ozone mixed gas be separated by low-temperature distillation utilizing a distillation column, similar to the first embodiment. When a distillation column is used, it is preferable that the operation conditions of the distillation column be conditions such that oxygen is not contaminated in the ozone side as much as possible.

In addition, oxygen separated in the top of the distillation column becomes the recycling raw material oxygen RO, passes through the seventh passage 26, joins the upstream side in the ozone formation step 11, and is introduced in the ozone formation step 11 again from the first passage 15 together with raw material oxygen GO.

As explained above, CF₄ is concentrated in the ozone OZ side in the ozone separation step 12. Therefore, CF₄ is not contaminated in the recycling raw material oxygen RO side, and there is no fear that CF₄ is dissociated in the ozone formation step 11.

In the ozone photodissociation step 13, the desired ozone isopotomers contained in ozone are selectively dissociated by the light L1 as shown in the chemical reaction formulae (1) and (2), and produce oxygen molecules. In order to separate efficiently and stably the desired ozone isotopologue, it is preferable that a photoreactor cell provided with a specific light source be cooled, the temperature and the pressure in the system comprising the photoreactor cell be adjusted to 100-250K and 13 kPa or less, similarly to the first embodiment. The pressure and the temperature can be adjusted depending on the dissociation conditions of ozone within a scope which does not liquefy or solidify ozone and CF₄. This is also similar in the second ozone photodissociation step 21.

The mixed gas formed in the ozone photodissociation step 13 is continuously trapped in the subsequent trapping step 31, similarly to the first embodiment, and preferably at 160 K or less, and more preferably at 90 to 160 K.

The mixed gas containing oxygen formed by dissociation of ozone in the ozone photodissociation step 13, CF₄, and non-dissociated ozone is separated by the separation operation in the oxygen isotope concentration step 14, for example, low-temperature distillation, into oxygen OCl, a CF₄-ozone mixed gas OF1 containing non-dissociated ozone and CF₄. Thereby, oxygen comprising a desired oxygen isotope is concentrated in the oxygen OC1.

In the oxygen isotope concentration step 14, the same manner as in the ozone separation step 12 can be adopted. Specifically, it is preferable that oxygen and the CF₄-ozone mixed gas be separated by low-temperature distillation using a distillation column, and that the operation conditions of the distillation column be adjusted so as not to contain oxygen in the second ozone photodissociation step 21.

In the second photodissociation step 21, the CF₄-ozone mixed gas OF 1 separated in the oxygen isotope concentration step 14 is irradiated with light L2 having a wavelength different from that of the light L1 in order to selectively dissociate ozone isotopologues different from the ozone isotopologues dissociated in the ozone photodissociation step 13. The operation conditions at this time are similar to those of the ozone photodissociation step 13.

The CF₄-ozone-oxygen mixed gas formed in the second ozone photodissociation step 21 is separated by the separation operation in the second oxygen isotope concentration step 22, for example, low-temperature distillation, into concentrated oxygen OC2 in which oxygen comprising a desired oxygen isotope is concentrated, and the CF₄-ozone mixed gas OF2 containing non-dissociated ozone and CF₄.

The separation conditions in the second oxygen isotope concentration step 22 are the same conditions as in the ozone separation step 12 and the oxygen isotope concentration step 14, and the detailed explanation is omitted.

Moreover, since it is not necessary to strictly prevent oxygen from contaminating in the subsequent ozone decomposition step 23, when low-temperature distillation using a distillation column is adopted, variations of the operation conditions in the distillation column can be increased.

The CF₄-ozone mixed gas OF2 obtained in the second oxygen isotope concentration step 22 is introduced in the ozone decomposition step 23, where ozone is decomposed and oxygen is obtained. Thereby, CF₄-oxygen mixed gas OF3 containing oxygen obtained by decomposition of ozone and CF₄ is obtained. In order to decompose the total amount of residual ozone, heat decomposition or catalyst decomposition, etc. can be adopted.

The CF₄-oxygen mixed gas OF3 obtained in the ozone decomposition step 23 is introduced in the CF₄ recovery step 24. In the CF₄ recovery step 24, low-temperature distillation using a distillation column or adsorption separation can be adopted.

In addition, it is preferable that materials forming devices be materials having no reactivity or catalyst functions to ozone, and glass, fluororesin (polytetrafluoroethylene) or the like is preferable.

Waste oxygen WO separated from the CF₄-oxygen mixed gas OF3 is discharged from the system. Remaining CF₄ is introduced in the fifth passage 19, and then is circulated and introduced in the ozone separation step 12. In addition, since a part of CF₄ is lost in the separation operation and the like, in order to maintain a fixed amount of CF₄ recycled in the system, a required amount of CF₄ is supplied from the sixth passage 25. In this way, since CF₄ is circulated and reused, it is possible to reduce the amount of CF₄ used.

In the present embodiment, the fourth passage 18 is provided to the second passage 16 through which the CF₄-ozone-raw material oxygen mixed gas from the ozone formation step 11 passes, similarly to the first embodiment shown in Fig. 1. In the embodiment, it is possible to add CF₄ from the fifth passage 18 and introduce the CF₄ together with ozone separated in the ozone separation step 12 to the ozone photodissociation step 13, and to add at least one noble gas selected from the group consisting of helium, neon, and argon from the fifth passage 18 in order to improve operability. However, the fourth passage 18 may also be abbreviated.

Since helium, neon, and/or argon added from the fourth passage 18 is removed from the ozone separation step 12 together with the recycling raw material oxygen RO, and circulates in the seventh passage 26, after the amount of the noble gas circulating through the seventh passage 26 is a given amount or more, the amount of the noble gas introduced from the fourth passage 18 may be an amount to make up for the deficit.

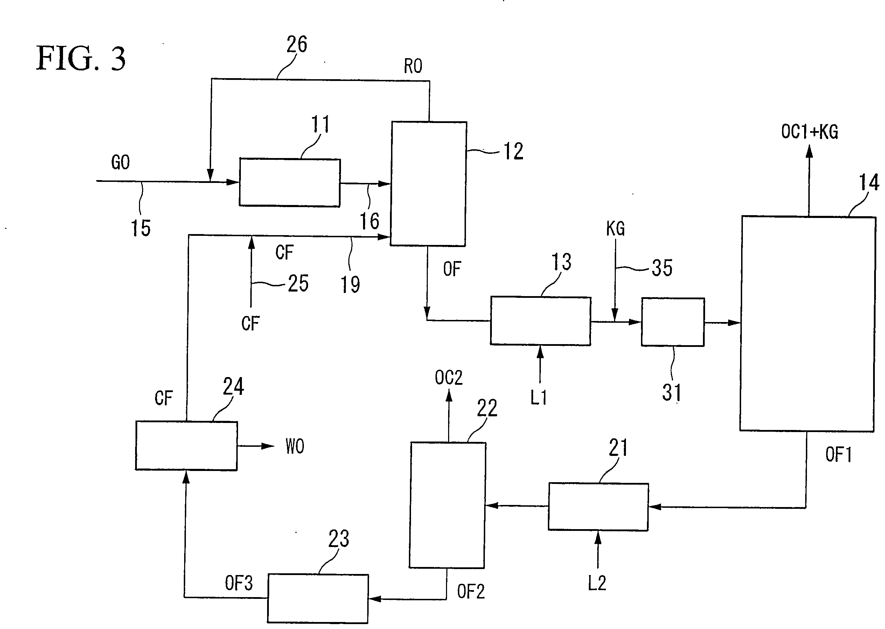

Fig. 3 is a schematic diagram showing a third embodiment of the concentration method for stable oxygen isotopes according to the present invention.

In the embodiment, at least one noble gas KG selected from the group consisting of helium, neon, and argon is introduced to the mixed gas containing oxygen obtained by dissociation of ozone in the ozone photodissociation step 13, non-dissociated ozone, and CF₄ from the eighth passage 35 before trapping the mixed gas. In addition, CF₄ is recycled and fed from the fifth passage 19 similarly to the second embodiment.

Therefore, oxygen formed by dissociation of ozone, non-dissociated ozone, CF₄ recycled in the system, and at least one noble gas KG selected from the group consisting of helium, neon, and argon are introduced to the oxygen isotope concentration step 14 while they are mixed. The noble gas KG is separated by the operation in the oxygen isotope concentration step 14, for example, low-temperature distillation, from ozone having a high boiling point and CF₄, and removed together with oxygen OC1 having a boiling point lower than that of these components. As a result, the oxygen OC1 comprising a desired isotope is obtained while diluting with the at least one noble gas KG selected from the group consisting of helium, neon, and argon. The flow rate of the oxygen OC1 diluted with the noble gas is adjusted more easily compared with a small amount of oxygen with high purity, and handling thereof is improved.

Moreover, other components in this embodiment are the same components as the second embodiment.

In addition, in order to improve handling of oxygen in the second oxygen isotope concentration step 22, a passage may be provided in the previous stage of the second oxygen isotope concentration step 22, and at least one noble gas selected from the group consisting of helium, neon, and argon may be introduced in the second oxygen isotope concentration step 22, similarly to the oxygen isotope concentration step 14.

As explained above, according to the present invention, ¹⁷O or ¹⁸O is continuously and efficiently separated and concentrated from the mixed gas obtained by the photodissociation, since CF₄ is used as a gas diluting ozone, and thereby the ozone concentration is maintained at a low level, and ozone is stably photodissociated. In addition, according to the present invention, ¹⁶O can also be purified by separating and concentrating these isotopes.

### INDUSTRIAL APPLICABILITY

The oxygen isotopes ¹⁷O and ¹⁸O have been widely used as a tracer in chemical and medical fields. The demand for ¹⁷O and ¹⁸O in these fields is large, but the isotope abundance in nature is extremely small, and it is necessary to separate and concentrate.

The present invention provides a method and an apparatus for separating and concentrating these rare oxygen isotopes ¹⁷O and ¹⁸O efficiently so as to improve the purity. The method and the apparatus can reduce cost.

## Claims

1. A method for concentrating oxygen isotopes comprising an ozone photodissociation step, a trapping step and an oxygen isotope concentration step, **characterised by**:
an ozone photodissociation step in which a mixed gas containing CF₄ and ozone is irradiated with light to dissociate selectively ozone isotopologues comprising a desired oxygen isotope in ozone to oxygen molecules;
a trapping step for trapping a mixed gas containing oxygen molecules formed by the dissociation of the ozone in the ozone photodissociation step, non-dissociated ozone molecules, and CF₄; and
an oxygen isotope concentration step in which the oxygen molecules are separated from the non-dissociated ozone molecules and CF₄ in the trapped mixed gas, and the oxygen isotopes are concentrated in the separated oxygen molecules.

2. A method for concentrating oxygen isotopes according to claim 1, wherein the oxygen isotope concentration step is a distillation separation step which is performed in coexistence of CF₄.

3. A method for concentrating oxygen isotopes according to claim 1 or 2, wherein the method further comprises, before the ozone photodissociation step, an ozone formation step in which ozone is generated from raw material oxygen and an ozone separation step in which CF₄ is added to a gas containing the ozone generated in the ozone formation step, and a CF₄-ozone mixed gas containing CF₄ and ozone is separated from unreacted raw material oxygen and the CF₄-ozone mixed gas separated in the ozone separation step is supplied to the ozone photodissociation step.

4. A method for concentrating oxygen isotopes according to claim 3, wherein the ozone formation step is performed by adding at least one noble gas selected from the group consisting of helium, neon, and argon to the raw material oxygen.

5. A method for concentrating oxygen isotopes according to claim 3 or 4, wherein the method further comprises, after the oxygen isotope concentration step, an ozone decomposition step in which ozone in the mixed gas separated in the oxygen isotope concentration step is decomposed to oxygen; and a CF₄ separation step in which CF₄ is separated from oxygen formed in the ozone decomposition step, and the CF₄ separated in the CF₄ separation step is mixed with ozone formed in the ozone formation step to recycle CF₄.

6. A method for concentrating oxygen isotopes according to claim 5, wherein the method further comprises, between the oxygen isotope concentration step and the ozone decomposition step, a second ozone photodissociation step in which the mixed gas containing non-dissociated ozone molecules and CF₄ separated in the oxygen isotope concentration step is irradiated with another light having a wavelength different from the wavelength of the light irradiated in the ozone photodissociation step to dissociate selectively other ozone isotopologues comprising another oxygen isotope than the ozone isotopologues dissociated in the ozone photodissociation step; a second trapping step for trapping a mixed gas containing oxygen molecules formed by dissociation in the second ozone photodissociation step, non-dissociation ozone molecules, and CF₄; and a second oxygen isotope concentration step in which the oxygen molecules are separated from the non-dissociated ozone molecules and CF₄ in the trapped mixed gas, and the oxygen isotopes are concentrated in the separated oxygen molecules,

7. A method for concentrating oxygen isotopes according to any one of claims 1 to 6, wherein the light used in the ozone photodissociation step is either near-infrared light within the range of 700-1000 nm, or visible light within the range of 450-850 nm.

8. A method for concentrating oxygen isotopes according to any one of claims 1 to 6, wherein the wavelength of the light used in the ozone photodissociation is within the range of 991.768-992.684 nm.

9. A method for concentrating oxygen isotopes according to any one of claims 1 to 8, wherein an absorption wavelength of the ozone is adjusted by applying electrical field when irradiating with light in the ozone photodissociation step.

10. A method for concentrating oxygen isotopes according to any one of claims 1 to 9, wherein the ozone photodissociation step is performed at low temperatures and low pressures.

11. A method for concentrating oxygen isotopes according to any one of claims 1 to 10, wherein the temperature at which the mixed gas is trapped is 160 K or less, and the CF₄-ozone mixed gas is continuously solidified and trapped in the trapping step.

12. A method for concentrating oxygen isotopes according to any one of claims 1 to 11, wherein the oxygen isotope comprised in the ozone molecules to be dissociated in the ozone photodissociation step is at least one consisting of ¹⁷O and ¹⁸O.

13. An apparatus for concentrating oxygen isotopes comprising: an ozone photodissociation means for irradiating light to a mixed gas containing CF₄ and ozone in order to dissociate ozone isotopologues comprising a desired oxygen isotope in the ozone; and an oxygen isotope concentration means for separating the oxygen molecules formed by the ozone photodissociation from non-dissociated ozone and CF₄ and concentrating the oxygen isotopes in the separated oxygen molecules.

14. An apparatus for concentrating oxygen isotopes according to Claim 13, wherein the apparatus further comprises:
an ozone formation device in which ozone is generated from raw material oxygen;
an ozone separation device comprising means for adding CF₄ to a gas containing the ozone generated in the ozone formation device, and in which a CF₄-ozone mixed gas containing CF₄ and ozone is separated from unreacted raw material oxygen, and
means for supplying the CF₄-ozone mixed gas separated in the ozone separation device to the ozone photodissociation means.

15. An apparatus for concentrating oxygen isotopes according to Claim 14, wherein the ozone separation device is a low-temperature distillation column which separates between oxygen and a mixture of ozone and CF₄.

## Patentansprüche

1. Verfahren zum Konzentrieren von Sauerstoffisotopen, das einen Ozon-Photodissoziationsschritt, einen Auffangschritt und einen Sauerstoffisotopen-Konzentrationsschritt umfasst, **gekennzeichnet durch** Folgendes:
einen Ozon-Photodissoziationsschritt, in dem ein Mischgas, das CF₄ und Ozon enthält, mit Licht bestrahlt wird, um selektiv Ozon-Isotopologe, die ein gewünschtes Sauerstoffisotop in Ozon umfassen, zu Sauerstoffmolekülen zu dissoziieren,
einen Auffangschritt, zum Auffangen eines Mischgases, das Sauerstoffmoleküle, die durch die Dissoziation des Ozons in dem Ozon-Photodissoziationsschritt gebildet wurden, nicht-dissoziierte Ozonmoleküle und CF₄ enthält, und
einen Sauerstoffisotopen-Konzentrationsschritt, in dem die Sauerstoffmoleküle von den Ozonmolekülen und CF₄ in dem aufgefangenen Mischgas abgeschieden werden und die Sauerstoffisotope in den abgeschiedenen Sauerstoffmolekülen konzentriert werden.

2. Verfahren zum Konzentrieren von Sauerstoffisotopen nach Anspruch 1, wobei der Sauerstoffisotopen-Konzentrationsschritt ein Destillationsabscheidungsschritt ist, der bei gleichzeitigem Vorhandensein von CF₄ durchgeführt wird.

3. Verfahren zum Konzentrieren von Sauerstoffisotopen nach Anspruch 1 oder 2, wobei das Verfahren ferner, vor dem Ozon-Photodissoziationsschritt, einen Ozonbildungsschritt, in dem Ozon aus Rohmaterial-Sauerstoff erzeugt wird, und einen Ozonabscheidungsschritt, in dem CF₄ einem Gas zugegeben wird, welches das in dem Ozonbildungsschritt erzeugten Ozon enthält, und ein CF₄-Ozon-Mischgas, das CF₄ und Ozon enthält, von nicht-umgesetztem Rohmaterial-Sauerstoff abgeschieden wird und das CF₄-Ozon-Mischgas, das in dem Ozonabscheidungsschritt abgeschieden wurde, dem Ozon-Photodissoziationsschritt zugeführt wird, umfasst.

4. Verfahren zum Konzentrieren von Sauerstoffisotopen nach Anspruch 3, wobei der Ozonbildungsschritt durch Zugeben wenigstens eines Edelgases, das ausgewählt ist aus der Gruppe, die aus Helium, Neon und Argon besteht, zu dem Rohmaterial-Sauerstoff durchgeführt wird.

5. Verfahren zum Konzentrieren von Sauerstoffisotopen nach Anspruch 3 oder 4, wobei das Verfahren ferner, nach dem Sauerstoffisotopen-Konzentrationsschritt, einen Ozonzerlegungsschritt, in dem Ozon in dem Mischgas, das in dem Sauerstoffisotopen-Konzentrationsschritt abgeschieden wurde, zu Sauerstoff zerlegt wird, und einen CF₄-Abscheidungsschritt, in dem CF₄ von Sauerstoff, der in dem Ozonzerlegungsschritt gebildet wird, abgeschieden wird und das CF₄, das in dem CF₄-Abscheidungsschritt abgeschieden wurde, mit Ozon, das in dem Ozonbildungsschritt gebildet wurde, gemischt wird, um CF₄ zurückzuführen.

6. Verfahren zum Konzentrieren von Sauerstoffisotopen nach Anspruch 5, wobei das Verfahren ferner, zwischen dem Sauerstoffisotopen-Konzentrationsschritt und dem Ozonzerlegungsschritt, einen zweiten Ozon-Photodissoziationsschritt, in dem das Mischgas, das nicht-dissoziierte Ozonmoleküle und CF₄ enthält, die in dem Ozon-Photodissoziationsschritt abgeschieden wurden, mit einem anderen Licht bestrahlt wird, das eine Wellenlänge aufweist, die sich von der Wellenlänge des Lichts unterscheidet, das in dem Ozon-Photodissoziationsschritt ausgestrahlt wurde, um selektiv andere Ozon-Isotopologe zu dissoziieren, die ein anderes Sauerstoffisotop umfassen als die Ozon-Isotopologe, die in dem Ozon-Photodissoziationsschritt dissoziiert wurden, einen zweiten Auffangschritt zum Auffangen eines Mischgases, das Sauerstoffmoleküle, die durch Dissoziation in dem zweiten Sauerstoffisotopen-Konzentrationsschritt gebildet wurden, nicht-dissoziierte Ozonmoleküle und CF₄ enthält, und einen zweiten Sauerstoffisotopen-Konzentrationsschritt, in dem die Sauerstoffmoleküle von den nicht-dissoziierten Ozonmolekülen und CF₄ in dem aufgefangenen Mischgas abgeschieden werden und die Sauerstoffisotope in den abgeschiedenen Sauerstoffmolekülen konzentriert werden.

7. Verfahren zum Konzentrieren von Sauerstoffisotopen nach einem der Ansprüche 1 bis 6, wobei das Licht, das in dem Ozon-Photodissoziationsschritt verwendet wird, entweder Nahe-Infrarot-Licht innerhalb eines Bereichs von 700 bis 1000 nm oder sichtbares Licht innerhalb eines Bereichs von 450 bis 850 nm ist.

8. Verfahren zum Konzentrieren von Sauerstoffisotopen nach einem der Ansprüche 1 bis 6, wobei die Wellenlänge des Lichts, das in dem Ozon-Photodissoziationsschritt verwendet wird, innerhalb des Bereichs von 991,768 bis 992,684 nm liegt.

9. Verfahren zum Konzentrieren von Sauerstoffisotopen nach einem der Ansprüche 1 bis 8, wobei eine Absorptionswellenlänge des Ozons eingestellt wird durch Anlegen eines elektrischen Feldes, wenn in dem Ozon-Photodissoziationsschritt Licht ausgestrahlt wird.

10. Verfahren zum Konzentrieren von Sauerstoffisotopen nach einem der Ansprüche 1 bis 9, wobei der Ozon-Photodissoziationsschritt bei niedrigen Temperaturen und niedrigen Drücken durchgeführt wird.

11. Verfahren zum Konzentrieren von Sauerstoffisotopen nach einem der Ansprüche 1 bis 10, wobei die Temperatur, bei der das Mischgas aufgefangen wird, 160 K oder weniger beträgt und das CF₄-Ozon-Mischgas in dem Auffangschritt kontinuierlich verfestigt und aufgefangen wird.

12. Verfahren zum Konzentrieren von Sauerstoffisotopen nach einem der Ansprüche 1 bis 11, wobei das Sauerstoffisotop, das in den Ozonmolekülen enthalten ist, die in dem Ozon-Photodissoziationsschritt dissoziiert werden sollen wenigstens eines ist, dass aus ¹⁷O und ¹⁸O besteht.

13. Vorrichtung zum Konzentrieren von Sauerstoffisotopen, die Folgendes umfasst:
ein Ozon-Photodissoziationsmittel, zum Ausstrahlen von Licht auf ein Mischgas, das CF₄ und Ozon enthält, um Ozon-Isotopologe, die ein gewünschtes Sauerstoffisotop in dem Ozon umfassen, zu dissoziieren, und ein Sauerstoffisotopen-Konzentrationsmittel zum Abscheiden der Sauerstoffmoleküle, die durch die Ozon-Photodissoziation gebildet wurden, von nicht-dissoziiertem Ozon und CF₄ und Konzentrieren der Sauerstoffisotope in den abgeschiedenen Sauerstoffmolekülen.

14. Vorrichtung zum Konzentrieren von Sauerstoffisotopen nach Anspruch 13, wobei die Vorrichtung ferner Folgendes umfasst:
eine Ozonbildungseinrichtung, in der Ozon aus Rohmaterial-Sauerstoff erzeugt wird,
eine Ozonabscheidungseinrichtung, die ein Mittel zum Zugeben von CF₄ zu einem Gas, welches das in dem Ozonbildungsschritt erzeugten Ozon enthält, umfasst und in der ein CF₄-Ozon-Mischgas, das CF₄ und Ozon enthält, von nicht-umgesetztem Rohmaterial-Sauerstoff abgeschieden wird, und
ein Mittel zum Zuführen des CF₄-Ozon-Mischgases, das in der Ozonabscheidungseinrichtung abgeschieden wurde, zu dem Ozon-Photodissoziationsmittel.

15. Vorrichtung zum Konzentrieren von Sauerstoffisotopen nach Anspruch 14, wobei die Ozonabscheidungseinrichtung eine Niedertemperatur-Destillationskolonne ist, die zwischen Sauerstoff und einem Gemisch von Ozon und CF₄ abscheidet.

## Revendications

1. Procédé de concentration d'isotopes d'oxygène comprenant une étape de photodissociation d'ozone, une étape de piégeage et une étape de concentration d'isotope d'oxygène, **caractérisé par** :
une étape de photodissociation d'ozone dans laquelle un gaz mélangé contenant du CF₄ et de l'ozone est irradié avec de la lumière permettant de dissocier sélectivement des isotopes d'ozone comprenant un isotope d'oxygène souhaité dans l'ozone aux molécules d'oxygène ;
une étape de piégeage permettant de piéger un gaz mélangé contenant des molécules d'oxygène formées par la dissociation de l'ozone dans l'étape de photodissociation d'ozone, des molécules d'ozone non-dissociées et du CF₄ ; et
une étape de concentration d'isotope d'oxygène dans laquelle les molécules d'oxygène sont séparées des molécules d'ozone non-dissociées et du CF₄ dans le gaz mélangé piégé, et les isotopes d'oxygène sont concentrés dans les molécules d'oxygène séparées.

2. Procédé de concentration d'isotopes d'oxygène selon la revendication 1, dans lequel l'étape de concentration d'isotopes d'oxygène est une étape de séparation par distillation qui est réalisée en coexistence avec le CF₄.

3. Procédé de concentration d'isotopes d'oxygène selon la revendication 1 ou 2, dans lequel le procédé comprend en outre, avant l'étape de photodissociation d'ozone, une étape de formation d'ozone dans laquelle de l'ozone est généré à partir de matière première oxygène et une étape de séparation d'ozone dans laquelle du CF₄ est ajouté à un gaz contenant l'ozone généré dans l'étape de formation d'ozone, et un gaz mélangé CF₄-ozone contenant du CF₄ et de l'ozone est séparé de la matière première oxygène non réagie et le gaz mélangé CF₄-ozone séparé dans l'étape de séparation d'ozone est amené à l'étape de photodissociation d'ozone.

4. Procédé de concentration d'isotopes d'oxygène selon la revendication 3, dans lequel l'étape de formation d'ozone est réalisée en ajoutant au moins un gaz noble sélectionné dans le groupe constitué d'hélium, de néon, et d'argon à la matière première oxygène.

5. Procédé de concentration d'isotopes d'oxygène selon la revendication 3 ou 4, dans lequel le procédé comprend en outre, après l'étape de concentration d'isotope d'oxygène, une étape de décomposition d'ozone dans laquelle l'ozone dans le gaz mélangé séparé dans l'étape de concentration d'isotope d'oxygène est décomposé en oxygène, et une étape de séparation de CF₄ dans laquelle du CF₄ est séparé de l'oxygène formé dans l'étape de décomposition d'ozone, et le CF₄ séparé dans l'étape de séparation de CF₄ est mélangé avec l'ozone formé dans l'étape de formation d'ozone afin de recycler le CF₄.

6. Procédé de concentration d'isotopes d'oxygène selon la revendication 5, dans lequel le procédé comprend en outre, entre l'étape de concentration d'isotope d'oxygène et l'étape de décomposition d'ozone, une seconde étape de photodissociation d'ozone dans laquelle le gaz mélangé contenant des molécules d'ozone non dissociées et du CF₄ séparé dans l'étape de concentration d'isotope d'oxygène est irradié avec une autre lumière présentant une longueur d'onde différente de la longueur d'onde irradiée dans l'étape de photodissociation d'ozone, afin de dissocier sélectivement d'autres isotopes d'ozone comprenant un autre isotope d'oxygène que les isotopes d'ozone dissociés dans l'étape de photodissociation d'ozone ; une seconde étape de piégeage permettant de piéger un gaz mélangé contenant des molécules d'oxygène formées par dissociation dans la seconde étape de photodissociation d'ozone, des molécules d'ozone de non-dissociation, et du CF₄ ; et une seconde étape de concentration d'isotope d'oxygène dans laquelle les molécules d'oxygène sont séparées des molécules d'ozone non-dissociées et du CF₄ dans le gaz mélangé piégé ; et les isotopes d'oxygène sont concentrés dans les molécules d'oxygène séparées.

7. Procédé de concentration d'isotopes d'oxygène selon l'une quelconque des revendications 1 à 6, dans lequel la lumière utilisée dans l'étape de photodissociation d'ozone est soit une lumière proche infrarouge dans la plage comprise entre 700 et 1000 nm, ou une lumière visible dans la plage comprise entre 450 et 850 nm.

8. Procédé de concentration d'isotopes d'oxygène selon l'une quelconque des revendications 1 à 6, dans lequel la longueur d'onde de la lumière utilisée dans la photodissociation d'ozone est dans la gamme comprise entre 991,768 et 992,684 Nm.

9. Procédé de concentration d'isotopes d'oxygène selon l'une quelconque des revendications 1 à 8, dans lequel une longueur d'onde d'absorption de l'ozone est ajustée en appliquant un champ électrique lors de l'irradiation avec de la lumière dans l'étape de photodissociation d'ozone.

10. Procédé de concentration d'isotopes d'oxygène selon l'une quelconque des revendications 1 à 9, dans lequel l'étape de photodissociation d'ozone est réalisée à basses températures et à basses pressions.

11. Procédé de concentration d'isotopes d'oxygène selon l'une quelconque des revendications 1 à 10, dans lequel la température à laquelle le gaz mélangé est piégé est 160 K ou moins, et le gaz mélangé CF₄-ozone est continuellement solidifié et piégé dans l'étape de piégeage.

12. Procédé de concentration d'isotopes d'oxygène selon l'une quelconque des revendications 1 à 11, dans lequel l'isotope d'oxygène compris dans les molécules d'ozone à dissocier dans l'étape de photodissociation d'ozone est au moins un isotope constitué de ¹⁷O et de ¹⁸O.

13. Appareil pour la concentration d'isotopes d'oxygène comprenant :
un moyen de photodissociation d'ozone permettant d'irradier de la lumière vers un gaz mélangé contenant du CF₄ et de l'ozone afin de dissocier des isotopes d'ozone comprenant un isotope d'oxygène souhaité dans l'ozone ; et un moyen de concentration d'isotope d'oxygène permettant de séparer les molécules d'oxygène formées par la photodissociation d'ozone de l'ozone non-dissociée et du CF₄ et concentrer les isotopes d'oxygène dans les molécules d'oxygène séparées.

14. Appareil permettant de concentrer des isotopes d'oxygène selon la revendication 13, dans lequel l'appareil comprend en outre :
un dispositif de formation d'ozone dans lequel l'ozone est généré à partir de matière première d'oxygène ;
un dispositif de séparation d'ozone comprenant un moyen permettant d'ajouter du CF₄ à un gaz contenant l'ozone généré dans le dispositif de formation d'ozone et dans lequel un gaz mélangé CF₄ -ozone contenant du CF₄ et de l'ozone est séparé de la matière première oxygène non réagie, et
un moyen permettant de fournir le gaz mélangé CF₄ -ozone séparé dans le dispositif de séparation d'ozone au moyen de photodissociation d'ozone.

15. Appareil permettant de concentrer des isotopes d'oxygène selon la revendication 14, dans lequel le dispositif de séparation d'ozone est une colonne de distillation basse température qui sépare l'oxygène et un mélange d'ozone et de CF₄.
